# EUROPEAN PATENT SPECIFICATION

(11) **EP 3 550 429 B1**
(45) Date of publication and mention of the grant of the patent: **06.10.2021**
(21) Application number: 17875111.1
(22) Date of filing: 31.08.2017
(51) Int. Cl.: G06F 9/44, G06F 8/30, G06N 3/02, G06N 3/06

(54) **INSTRUCTION GENERATION PROCESS MULTIPLEXING METHOD AND DEVICE**
MULTIPLEXING-VERFAHREN UND -VORRICHTUNG MIT ANLEITUNGSERZEUGUNGSPROZESS
PROCÉDÉ ET DISPOSITIF DE MULTIPLEXAGE DE PROCESSUS DE GÉNÉRATION D'INSTRUCTIONS

(30) Priority: 30.11.2016 CN 201611092372
(43) Date of publication of application: 09.10.2019
(73) Proprietor: Shanghai Cambricon Information Technology Co., Ltd, Beijing 100191 (CN)
(72) Inventor: CHEN, Yunji, Shanghai 201203 (CN); REN, Yixuan, Shanghai 201203 (CN); DU, Zidong, Shanghai 201203 (CN); CHEN, Tianshi, Shanghai 201203 (CN)
(74) Representative: AWA Sweden AB
(86) International application number: PCT/CN2017/099936
(87) International publication number: WO 2018/099151

(56) References cited:
- CN-A- 106 126 235
- CN-A- 106 557 332
- US-A1- 2007 094 648
- US-A1- 2016 180 200
- US-B1- 6 308 320

## Description

### TECHNICAL FIELD

The present disclosure relates to the technical field of artificial neural network, and more specifically, relates to a reusing method for instruction generation process and reusing device for instruction generation process.

### BACKGROUND

Artificial neural network is one of the most outstanding machine learning and pattern recognition algorithms. It is the current mainstream direction in both academia and industry. However, based on the new requirements of high performance under the premise of small size and low power consumption, traditional large-scale neural networks and huge computing devices are difficult to truly enter people's daily lives, so special processors designed for neural networks have become a new trend.

Instruction generation for a neural network processor is a relatively complicated process, especially in the case of large data sizes and complex network structures. A single instruction of a neural network processor tends to be long and limited by on-chip computing and storage resources. Larger input data often requires multiple instruction processing. In addition, the obvious trend of the current neural network algorithm is that the number of network layers is increasing and the layer scale is getting larger and larger. These all lead to more cumbersome instruction generation of the neural network processor, and even affect the advantages of the hardware itself.

US 2016/180200 discloses one example of large-scale classification in neural networks using hashing.

### SUMMARY

In order to overcome the deficiencies of existing technical solutions, the present disclosure provides a reusing device and a method used for the instruction generation process of a neural network processor. The invention is defined by the appended independent claims. The dependent claims define preferred embodiments.

According to one aspect, the present disclosure provides a reusing method for the instruction generation process, which is used for a neural network processor, comprising: computing a Hash value of an i^{th} layer of network; and determining whether the computed Hash value of the i^{th} layer of network is the same as a Hash value corresponding to a previous network layer, and, if yes, generating an instruction of the i^{th} layer of network by using an instruction of the previous network layer having the same Hash value, i being a positive integer.

Computing the Hash value of the i^{th} layer of network on the basis of preconfigured information comprises: computing the Hash value of the i^{th} layer of network on the basis of layer type and/or layer scale information of the i^{th} layer of network.

In some embodiments, prior to determining whether the Hash value of the i^{th} layer of network is the same as a Hash value corresponding to a previous network layer, the reusing method further comprises: establishing a Hash table for storing information corresponding to each previous network layer, fields in the Hash table for each previous network including: layer serial number, Hash value and head address for instruction of corresponding layer.

In some embodiments, the fields further comprise: layer type and/or layer scale.

In some embodiments, generating the instruction of the i^{th} layer of network by means of the instruction reusing manner comprises: copying instruction-to-be-reused according to the head address for instruction in corresponding information of the previous network layer having the same Hash value stored in the Hash table; and amending the instruction-to-be-reused so as to generate an instruction of the i^{th} layer of network.

In some embodiments, if the Hash value of the i^{th} layer of network does not exist in the Hash table, the Hash value and the head address for instruction of the i^{th} layer of network will be stored into the Hash table, and the instruction of the i^{th} layer of network will be directly generated.

In some embodiments, the reusing method further comprises storing the instruction of the i^{th} layer of network.

In some embodiments, prior to determining whether the Hash value of the i^{th} layer of network exists in the Hash table, the reusing method further comprises:
determining whether i is greater than or equal to a, a being a positive integer and satisfying a≥2; if i≥a, determining whether the Hash value of the i^{th} layer of network exists in the Hash table; and if i<a, storing the Hash value and the head address for instruction of the i^{th} layer of network into the Hash table, and directly generating the instruction of the i^{th} layer of network.

In some embodiments, after storing the instruction of the i^{th} layer of network, the reusing method further comprises: letting i=i+1, and determining whether i is smaller than or equal to b, b being a positive integer and satisfying b>a; if i≤b, returning to the step of computing the Hash value of the i^{th} layer of network; and if i>b, finishing instruction generation; b being the number of network layers of the neural network processor.

In some embodiments, the network is an artificial neural network.

According to a second aspect, the present disclosure provides a reusing device for instruction generation process, which is used for a neural network processor, the device comprising: a running buffer device (2) configured to store Hash values corresponding to previous network layers; an instruction reusing controlling device (1) configured to generate a Hash value of an i^{th} layer of network, determine whether the Hash value of the i^{th} layer of network is the same as a Hash value corresponding to a previous network layer and, if yes, issue an instruction reusing command; and a reusing instruction generating device (3) configured to perform instruction reusing on the basis of the instruction reusing command issued by the instruction reusing controlling device (1), so as to generate an instruction of the i^{th} layer of network, i being a positive integer, wherein the instruction reusing controlling device (1) comprises a computing unit (11) configured to compute the Hash value of the ilh layer of network on the basis of layer type and/or layer scale information of the ith layer of network.

In some embodiments, the instruction reusing controlling device (1) comprises: a computing unit (11) configured to receive type and/or scale information of the i^{th} layer of network, and compute the Hash value of the i^{th} layer of network; and a searching and determining unit (12) configured to search whether a previous network having the same Hash value as the i^{th} layer of network exists in a Hash table and, if yes, issue the instruction reusing command. In some embodiments, the reusing instruction generating device (3) comprises: a reusing instruction extracting unit (31) configured to, after receiving the instruction reusing command, copy an instruction-to-be-reused according to a head address for instruction in corresponding information of the previous network layer having the same Hash value stored in a Hash table; and an instruction amending unit (32) configured to amend the instruction-to-be-reused so as to generate the instruction of the i^{th} layer of network.

In some embodiments, the reusing device further comprises an instruction generating device configured to directly generate the instruction of the i^{th} layer of network if the instruction reusing controlling device determines that no instruction reusing is to be performed.

In some embodiments, the reusing device further comprises an instruction storing device configured to store the instruction of the i^{th} layer of network.

In some embodiments, the network is an artificial neural network.

According to a third aspect, the present disclosure provides a device comprising a storing device and a computing device, wherein the storing device stores instructions, and the computing device executes any one of the afore-mentioned reusing methods when operating the instructions.

The above technical solutions show that the present disclosure has at least the following beneficial effects:
By determining whether the Hash values are the same, the instruction reusing for the network layers of the neural network processor, which have the same Hash value, is realized, thereby reducing the generation overhead of repeated instructions in the instruction generation process and shortening the total execution time of the neural network;

The hardware advantages of the neural network processor are highlighted, the computing resources can be more fully used for the computing of the neural network itself, and the total power consumption is also reduced.

### BRIEF DESCRIPTION OF THE DRAWINGS

Fig. 1 is a flowchart of a reusing method used for instruction generation process of a neural network processor according to an embodiment of the present disclosure;

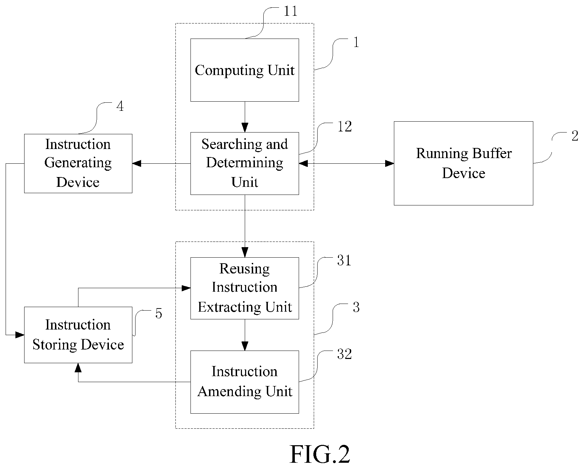

Fig. 2 is a structure diagram of a reusing device used for instruction generation process of a neural network processor according to an embodiment of the present disclosure.

### DETAILED DESCRIPTION

Some embodiments of the present disclosure will be described more comprehensively hereinafter with reference to the appended drawings, in which some, but not all, of the embodiments will be shown. In fact, the embodiments of the present disclosure may be realized in many different forms and should not be interpreted as being limited to the embodiments set forth herein; in contrast, these embodiments are provided so that the present disclosure meets applicable legal requirements.

In this specification, the following various embodiments for describing the principles of the present disclosure are merely illustrative and should not be construed as limiting the scope of the disclosure in any way. The following description of the drawings helps to completely understand the exemplary embodiments of the present disclosure limited by the claims. The description below includes numerous specific details to assist the understanding, but these details are considered to be merely exemplary. Accordingly, it should be realized by one skilled in the art that the embodiments described in this text can be changed and amended in many different ways without departing from the scope of the claims. In addition, descriptions of well-known functions and constructions are omitted for clarity and conciseness. Further, consistent reference numerals are used throughout the drawings for similar functions and operations.

In order to make the objects, technical solutions and advantages of the present disclosure clearer, the present disclosure will be further explained in details with reference to the embodiments and drawings.

The embodiments of the present disclosure provide a reusing method used for an instruction generation process of a neural network processor. The instruction reusing in the instruction generation process of the neural network processor reduces the generation overhead of repeated instructions in the instruction generation process and shortens the total execution time of the neural network.

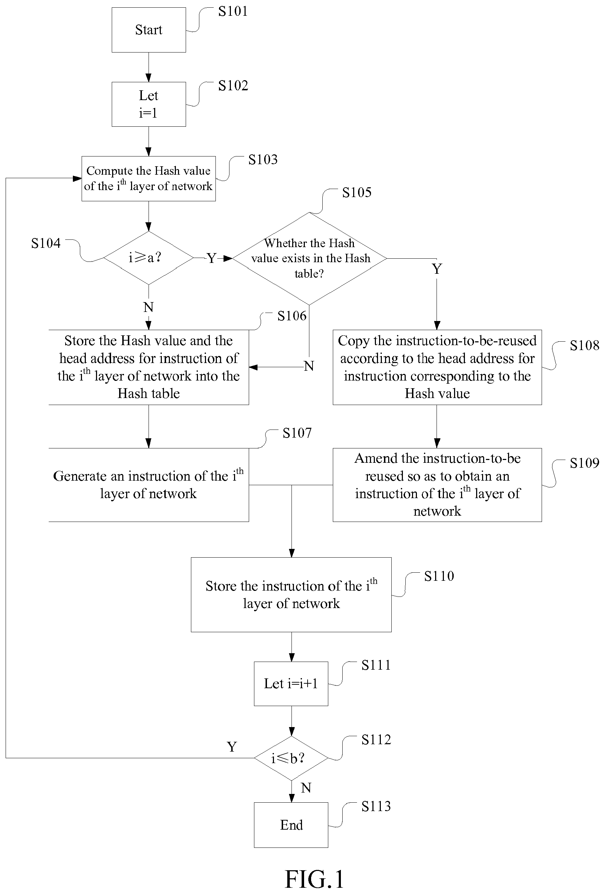

Specifically, the reusing method comprises the following detailed steps shown in Fig. 1:
Step S101: Start;
The instruction generation step of the neural network processor starts;
Step S102: Let i=1, wherein i is the serial number of the network layer of the neural network processor, and is a positive integer.

In this embodiment, the execution starts from the first layer. It can be understood by one skilled in the art that the instruction generation of the neural network processor is not necessarily limited to be started from the first layer; instead, the execution can be started from the first layer or any subsequent layer.

Step S103: Compute a Hash value of the i^{th} layer of network. Corresponding Hash value can be calculated according to such information as type, scale and so on of the i^{th} layer of network, and Hash values can be obtained by using a given Hash function.

Step S104: Determine whether i is greater than or equal to a, a being a positive integer. It is determined whether the instruction reusing operation can be performed for the network layers following the a^{th} layer. In this embodiment, a is preferably to be 2. If the result is Y, namely, i is greater than or equal to a, Step S105 is executed; otherwise, if the result is N, namely, i is smaller than a, Step S106 is executed.

Step S105: Search in a Hash table according to Hash value, wherein the Hash table is stored in a running buffer device, and stores Hash values of one or more layers prior to the i^{th} layer of network so as to compare the Hash value for each of subsequent layers.

As shown in Table 1, there are 5 fields in the Hash Table: the serial number of layers, the layer type, the layer scale, Hash value, and the head address of the instruction for this layer stored in the instruction storing device, wherein the first 4 fields are used by the searching and determining unit to determine whether the instruction can be reused, and the last field is used by the after-mentioned extracting unit of the reused instruction for extracting the needed instructions from the instruction storing device.

**Table 1**

| Serial Number of Layers | Layer Type | Layer Scale | Hash Value | Head Address |
|---|---|---|---|---|
| 1 | CONV | input(9,9), kernel(5,5), stride(1,1) | 9d28 | 0x10000000 |

If the result is Y, it means that the Hash value of the i^{th} layer of network exists in the Hash table and that the type and scale of a certain previous layer is totally identical with those of the current layer, so the instruction can be reused, and Step S108 is executed; otherwise, it means the types and scales of all of the previous layers are different from those of the current layer, so the instruction cannot be reused, and Step S106 is executed.

Step S106: Store the Hash value and the instruction head address of the i^{th} layer of network into the Hash table stored in the running buffer device, and then execute Step S107.
Step S107: Generate an instruction of the i^{th} layer of network by means of regular manner;
Step S108: Copy the instruction-to-be-reused according to the instruction head address corresponding to the Hash value, namely, extract corresponding instruction of the Hash value, and then execute Step S110;
Step S109: Amend the instruction-to-be-reused so as to obtain an instruction of the i^{th} layer of network. Specifically, amend the copied instruction-to-be-reused on the basis of the characteristics of the input and output data of this layer (the i^{th} layer), which specifically means to change the places relating to input data address and output data address in the instruction-to-be-reused into corresponding values of the new layer, obtain the instruction needed by the current layer, and execute Step S110;
Step S110: Store the instruction of the i^{th} layer of network into the instruction storing device;
Step S111: Let i=i+1;
Step S112: Determine whether i is smaller than or equal to b, b being a positive integer and greater than a, in this embodiment, b is the layer number of the network in the neural network processor; if i is smaller than or equal to b, namely, the result is Y, then return to Step S103, and if i is greater than b, namely, the result is N, then execute Step S113; in the present disclosure, the value of b is not limited to be the layer number of the network in the neural network processor, and can be smaller than or equal to the layer number of the network in the neural network processor.
Step S113: Finish.

On the basis of identical inventive concept, the embodiments of the present disclosure also provide a reusing device used for an instruction generation process of a neural network processor, as shown in Fig. 3, the reusing device comprises an instruction reusing controlling device 1, a running buffer device 3 and a reusing instruction generating device 2.

Wherein, the instruction reusing controlling device 1 is used for generating a Hash value of scale information for each network layer, and determining whether instruction reusing is needed; the running buffer device 2 is used for storing the Hash value of scale information for each network layer; and the reusing instruction generating device 3 is used for generating, when it is determined the instructions can be reused, new instructions after reusing.

Specifically, the instruction reusing controlling device 1 comprises a computing unit 11 and a searching and determining unit 12, wherein the computing unit 11 is used for receiving such information as the type, the scale and so on of the i^{th} layer of network, and computing corresponding Hash value of the i^{th} layer of network via a given Hash function, and send the Hash value of the i^{th} layer of network to the searching and determining unit; the searching and determining unit 12 acquires the Hash table stored in the running buffer device and searches the Hash value of the current layer so as to determine whether the Hash value of the current layer exists in the Hash table. If it is determined that the Hash value of the current layer exists, the searching and determining unit 12 will send the head address of the found layer instruction in the instruction storing device, which is corresponding to the Hash value, to the reusing instruction generating device so as to perform instruction reusing. If it is determined that the Hash value of the current layer does not exist, no instruction reusing will be performed. The Hash value of the current layer and corresponding information will be stored in the Hash table, and an instruction of the current layer will be generated by an instruction generating device 4 by means of a regular manner.

The reusing instruction generating device 3 comprises a reusing instruction extracting unit 31 and an instruction amending unit 32, wherein the reusing instruction extracting unit 31 receives the head address sent by the instruction reusing controlling device 1, reads all instructions of corresponding layer from the instruction storing device, and sends the instructions to the instruction amending unit 32; the instruction amending unit 32 specifically amends the copied instructions-to-be-reused according to the characteristics of the input and output data of the current layer (the i^{th} layer), that is to amend the places where the input data address and output data address are involved in the instructions-to-be-reused, thereby obtaining the instruction needed by the current layer.

Both the instructions generated by the instruction generating device 4 and the instructions generated by the instruction amending unit 32 are stored into the instruction storing device 5.

Through the instruction reusing during the instruction generation process of the neural network processor, the generation overhead of repeated instructions in the instruction generation process can be reduced as much as possible, and the total execution time of the neural network can be shortened, as a result, the hardware advantages of the neural network processor are highlighted. If a larger instruction scheduling window is adopted, the instruction pipelining on such a basis can further reduce the storage resource occupancy.

The process or method described in foregoing drawings can be executed through processing logic that includes hardware (e.g., circuits, specialized logic, etc.), firmware, software (e.g., software hosted on non-transient computer readable media), or a combination of two of them. Although the process or method is described in some order, it should be understood that some of the afore-mentioned operations can be executed in a different order. In addition, some operations can be executed concurrently rather than sequentially.

It should be noted that the above definitions of various elements and methods are not limited to specific structures, shapes or manners mentioned in the embodiments, and can be easily changed or replaced by one skilled in the art.

The afore-mentioned embodiments further describe the details of the objects, the technical solutions, and the beneficial effects of the present disclosure. It should be understood that the foregoing description is merely exemplary embodiments of the present disclosure rather than limitation.

## Claims

1. A reusing method for an instruction generation process, which is used for a neural network processor, the method being **characterized by** comprising:
computing (S103) a Hash value of an i^{th} layer of a network on the basis of preconfigured information; and
determining (S105) whether the computed Hash value of the i^{th} layer of network is the same as a Hash value corresponding to a previous network layer, and, if yes, generating an instruction of the i^{th} layer of network by using an instruction of the previous network layer having the same Hash value by means of an instruction reusing manner, i being a positive integer;
wherein computing the Hash value of the i^{th} layer of network on the basis of preconfigured information comprises:
computing the Hash value of the i^{th} layer of network on the basis of layer type and/or layer scale information of the i^{th} layer of network.

2. The reusing method according to claim 1, wherein prior to determining whether the Hash value of the i^{th} layer of network is the same as a Hash value corresponding to a previous network layer, the reusing method further comprises:
establishing a Hash table for storing information corresponding to each previous network layer, fields in the Hash table for each previous network layer including: layer serial number, Hash value and head address for instruction of corresponding layer.

3. The reusing method according to claim 2, wherein the fields further comprise: layer type and/or layer scale.

4. The reusing method according to claim 2, wherein generating the instruction of the i^{th} layer of network by means of the instruction reusing manner comprises:
copying (S108) instruction-to-be-reused according to the head address for instruction in corresponding information of the previous network layer having the same Hash value stored in the Hash table; and
amending (S109) the instruction-to-be-reused so as to generate an instruction of the i^{th} layer of network.

5. The reusing method according to claim 2, wherein the reusing method further comprises: if the Hash value of the i^{th} layer of network does not exist in the Hash table, storing (S106) the Hash value and the head address for instruction of the i^{th} layer of network into the Hash table, and directly generating (S107) the instruction of the i^{th} layer of network.

6. The reusing method according to any one of claims 1 to 5, wherein the reusing method further comprises:
storing (S 110) the instruction of the i^{th} layer of network.

7. The reusing method according to claim 2, wherein prior to determining whether the Hash value of the i^{th} layer of network exists in the Hash table, the reusing method further comprises:
determining (S104) whether i is greater than or equal to a, a being a positive integer and satisfying a≥2;
if i≥a, determining (S105) whether the Hash value of the i^{th} layer of network exists in the Hash table; and
if i<a, storing (SI06) the Hash value and the head address for instruction of the i^{th} layer of network into the Hash table, and directly generating the instruction of the i^{th} layer of network.

8. The reusing method according to claim 6, wherein after storing the instruction of the i^{th} layer of network, the reusing method further comprises:
letting (S111) i=i+1, and determining (SI12) whether i is smaller than or equal to b, b being a positive integer and satisfying b>a;
if i≤b, returning (SI03) to the step of computing the Hash value of the i^{th} layer of network; and
if i>b, finishing instruction generation (S113);
b being the number of network layers of the neural network processor.

9. The reusing method according to any one of claims 1 to 8, wherein the network is an artificial neural network.

10. A reusing device for instruction generation process, which is used for a neural network processor, the device being **characterized by**:
a running buffer device (3) configured to store Hash values corresponding to previous network layers;
an instruction reusing controlling device (1) configured to
generate a Hash value of an i^{th} layer of network on the basis of preconfigured information,
determine whether the Hash value of the i^{th} layer of network is the same as a Hash value corresponding to a previous network layer and, if yes, issue an instruction reusing command; and
a reusing instruction generating device (2) configured to perform instruction reusing on the basis of the instruction reusing command issued by the instruction reusing controlling device (1), so as to generate an instruction of the i^{th} layer of network, i being a positive integer;
wherein the instruction reusing controlling device (1) comprises a computing unit (11) configured to compute the Hash value of the i^{th} layer of network on the basis of layer type and/or layer scale information of the i^{th} layer of network.

11. The reusing device according to claim 10, wherein the instruction reusing controlling device (1) comprises:
the computing unit (11) configured to receive the layer type and/or the layer scale information of the i^{th} layer of network, and compute the Hash value of the i^{th} layer of network; and
a searching and determining unit (12) configured to search whether a previous network layer having the same Hash value as the i^{th} layer of network exists in a Hash table and, if yes, issue the instruction reusing command.

12. The reusing device according to claim 10 or 11, wherein the reusing instruction generating device (2) comprises:
a reusing instruction extracting unit (31) configured to, after receiving the instruction reusing command, copy an instruction-to-be-reused according to a head address for instruction in corresponding information of the previous network layer having the same Hash value stored in a Hash table; and
an instruction amending unit (32) configured to amend the instruction-to-be-reused so as to generate the instruction of the i^{th} layer of network.

13. The reusing device according to claim 10, wherein the reusing device further comprises:
an instruction generating device (4) configured to directly generate the instruction of the i^{th} layer of network if the instruction reusing controlling device (1) determines that no instruction reusing is to be performed.

14. The reusing device according to any one of claims 10-13, wherein the reusing device further comprises:
an instruction storing device (5) configured to store the instruction of the i^{th} layer of network.

15. The reusing device according to any one of claims 10-13, wherein the network is an artificial neural network.

16. A storing device (5) storing instructions that, when executed on a computing device (11), perform the reusing method according to any one of claims 1-9.

## Patentansprüche

1. Wiederverwendungsverfahren für einen Anweisungserzeugungsprozess, der für einen Prozessor eines neuronalen Netzes verwendet wird, wobei das Verfahren **dadurch gekennzeichnet ist, dass** es Folgendes umfasst:
Berechnen (S103) eines Hash-Wertes einer i-ten Netzschicht anhand von im Voraus konfigurierten Informationen; und
Bestimmen (S105), ob der berechnete Hash-Wert der i-ten Netzschicht derselbe wie ein Hash-Wert, der einer vorherigen Netzschicht entspricht, ist, und wenn ja,
Erzeugen einer Anweisung der i-ten Netzschicht durch Verwenden einer Anweisung der vorherigen Netzschicht mit demselben Hash-Wert mittels einer Anweisungswiederverwendungsweise, wobei i eine positive ganze Zahl ist;
wobei das Berechnen des Hash-Wertes der i-ten Netzschicht anhand von im Voraus konfigurierten Informationen Folgendes umfasst:
Berechnen des Hash-Wertes der i-ten Netzschicht anhand eines Schichttyps und/oder von Schichtskalierungsinformationen der i-ten Netzschicht.

2. Wiederverwendungsverfahren nach Anspruch 1, wobei vor dem Bestimmen, ob der Hash-Wert der i-ten Netzschicht derselbe wie ein Hash-Wert, der einer vorherigen Netzschicht entspricht, ist, das Wiederverwendungsverfahren ferner Folgendes umfasst:
Einrichten einer Hash-Tabelle zum Speichern von Informationen, die jeder vorherigen Netzschicht entsprechen, wobei Felder in der Hash-Tabelle für jede vorherige Netzschicht Folgendes enthalten: eine Schichtseriennummer, einen Hash-Wert und eine Kopfadresse für eine Anweisung einer entsprechenden Schicht.

3. Wiederverwendungsverfahren nach Anspruch 2, wobei die Felder ferner Folgendes umfassen: einen Schichttyp und/oder eine Schichtskalierung.

4. Wiederverwendungsverfahren nach Anspruch 2, wobei das Erzeugen der Anweisung der i-ten Netzschicht mittels der Anweisungswiederverwendungsweise Folgendes umfasst:
Kopieren (S108) einer wiederzuverwendenden Anweisung gemäß der Kopfadresse für eine Anweisung in entsprechenden Informationen der vorherigen Netzschicht mit demselben in der Hash-Tabelle gespeicherten Hash-Wert; und
Verbessern (S109) der wiederzuverwendenden Anweisung, um eine Anweisung der i-ten Netzschicht zu erzeugen.

5. Wiederverwendungsverfahren nach Anspruch 2, wobei das Wiederverwendungsverfahren ferner Folgendes umfasst:
dann, wenn der Hash-Wert der i-ten Netzschicht nicht in der Hash-Tabelle vorhanden ist, Speichern (S106) des Hash-Wertes und der Kopfadresse für eine Anweisung der i-ten Netzschicht in der Hash-Tabelle und
unmittelbar Erzeugen (S107) der Anweisung der i-ten Netzschicht.

6. Wiederverwendungsverfahren nach einem der Ansprüche 1 bis 5, wobei das Wiederverwendungsverfahren Folgendes umfasst:
Speichern (S110) der Anweisung der i-ten Netzschicht.

7. Wiederverwendungsverfahren nach Anspruch 2, wobei vor dem Bestimmen, ob der Hash-Wert der i-ten Netzschicht in der Hash-Tabelle vorhanden ist, das Wiederverwendungsverfahren ferner Folgendes umfasst:
Bestimmen (S104), ob i größer als oder gleich a ist,
wobei a eine positive ganze Zahl ist und a ≥ 2 erfüllt;
dann, wenn i ≥ a, Bestimmen (S105), ob der Hash-Wert der i-ten Netzschicht in der Hash-Tabelle vorhanden ist; und
dann, wenn i < a, Speichern (S106) des Hash-Wertes und
der Kopfadresse für eine Anweisung der i-ten Netzschicht in der Hash-Tabelle und unmittelbar Erzeugen der Anweisung der i-ten Netzschicht.

8. Wiederverwendungsverfahren nach Anspruch 6, wobei nach dem Speichern der Anweisung der i-ten Netzschicht das Wiederverwendungsverfahren ferner Folgendes umfasst:
Setzen (S111) i = i + 1 und Bestimmen (S112), ob i kleiner als oder gleich b ist, wobei b eine positive ganze Zahl ist und b > a erfüllt;
dann, wenn i ≤ b, Zurückgehen (S103) zu dem Schritt des Berechnens des Hash-Wertes der i-ten Netzschicht;
und
dann, wenn i > b, Beenden der Anweisungserzeugung (S113) ;
wobei b die Anzahl von Netzschichten des Prozessors des neuronalen Netzes ist.

9. Wiederverwendungsverfahren nach einem der Ansprüche 1 bis 8, wobei das Netz ein künstliches neuronales Netz ist.

10. Wiederverwendungsvorrichtung für einen Anweisungserzeugungsprozess, der für einen Prozessor eines neuronalen Netzes verwendet wird, wobei die Vorrichtung **gekennzeichnet ist durch**:
eine laufende Zwischenspeichervorrichtung (3), die konfiguriert ist, Hash-Werte zu speichern, die vorherigen Netzschichten entsprechen;
eine Anweisungswiederverwendungs-Steuervorrichtung (1), die konfiguriert ist zum:
Erzeugen eines Hash-Wertes einer i-ten Netzschicht anhand von im Voraus konfigurierten Informationen,
Bestimmen, ob der Hash-Wert der i-ten Netzschicht gleich einem Hash-Wert ist, der einer vorherigen Netzschicht entspricht, und wenn ja, Ausgeben eines Anweisungswiederverwendungsbefehls; und
eine Wiederverwendungsanweisungs-Erzeugungsvorrichtung (2), die konfiguriert ist, eine Anweisungswiederverwendung anhand des **durch** die Anweisungswiederverwendungs-Steuervorrichtung (1) ausgegebenen Anweisungswiederverwendungsbefehls auszuführen, um eine Anweisung der i-ten Netzschicht zu erzeugen, wobei i eine positive ganze Zahl ist;
wobei die Anweisungswiederverwendungs-Steuervorrichtung (1) eine Recheneinheit (11) umfasst, die konfiguriert ist, den Hash-Wert der i-ten Netzschicht anhand eines Schichttyps und/oder von Schichtskalierungsinformationen der i-ten Netzschicht zu berechnen.

11. Wiederverwendungsvorrichtung nach Anspruch 10, wobei die Anweisungswiederverwendungs-Steuervorrichtung (1) Folgendes umfasst:
die Recheneinheit (11), die konfiguriert ist, den Schichttyp und/oder die Schichtskalierungsinformationen der i-ten Netzschicht zu empfangen und den Hash-Wert der i-ten Netzschicht zu berechnen; und
eine Such- und Bestimmungseinheit (12), die konfiguriert ist, zu suchen, ob eine vorherige Netzschicht mit demselben Hash-Wert wie die i-te Netzschicht in einer Hash-Tabelle vorhanden ist, und wenn ja, den Anweisungswiederverwendungsbefehl auszugeben.

12. Wiederverwendungsvorrichtung nach Anspruch 10 oder 11, wobei die Wiederverwendungsanweisungs-Erzeugungsvorrichtung (2) Folgendes umfasst:
eine Wiederverwendungsanweisungs-Extraktionseinheit (31), die konfiguriert ist, nach dem Empfangen des Anweisungswiederverwendungsbefehls eine wiederzuverwendende Anweisung gemäß einer Kopfadresse für eine Anweisung in entsprechenden Informationen der vorherigen Netzschicht mit dem demselben in einer Hash-Tabelle gespeicherten Hash-Wert zu kopieren; und
eine Anweisungsverbesserungseinheit (32), die konfiguriert ist, die wiederzuverwendende Anweisung zu verbessern, um die Anweisung der i-ten Netzschicht zu erzeugen.

13. Wiederverwendungsvorrichtung nach Anspruch 10, wobei die Wiederverwendungsvorrichtung ferner Folgendes umfasst:
eine Anweisungserzeugungsvorrichtung (4), die konfiguriert ist, die Anweisung der i-ten Netzschicht unmittelbar zu erzeugen, wenn die Anweisungswiederverwendungs-Steuervorrichtung (1) bestimmt, dass keine Anweisungswiederverwendung auszuführen ist.

14. Wiederverwendungsvorrichtung nach einem der Ansprüche 10-13, wobei die Wiederverwendungsvorrichtung ferner Folgendes umfasst:
eine Anweisungsspeichervorrichtung (5), die konfiguriert ist, die Anweisung der i-ten Netzschicht zu speichern.

15. Wiederverwendungsvorrichtung nach einem der Ansprüche 10-13, wobei das Netz ein künstliches neuronales Netz ist.

16. Speichervorrichtung (5), die Anweisungen speichert, die dann, wenn sie auf einer Rechenvorrichtung (11) ausgeführt werden, das Wiederverwendungsverfahren nach einem der Ansprüche 1-9 ausführen.

## Revendications

1. Procédé de réutilisation destiné à un processus de génération d'instructions, qui est utilisé pour un processeur de réseau neuronal, le procédé étant **caractérisé en ce qu'**il comprend :
le calcul (S103) d'une valeur de hachage d'une i^{è} couche d'un réseau sur la base d'informations préconfigurées ; et
la détermination (S105) pour savoir si la valeur de hachage calculée de la i^{è} couche de réseau est la même qu'une valeur de hachage correspondant à une couche de réseau précédente, et si c'est le cas, générer une instruction de la i^{è} couche de réseau en utilisant une instruction de la couche de réseau précédente ayant la même valeur de hachage au moyen d'une manière de réutilisation d'instructions, i étant un nombre entier positif ;
dans lequel le calcul de la valeur de hachage de la i^{è} couche de réseau sur la base des informations préconfigurées comprend :
le calcul de la valeur de hachage de la i^{è} couche de réseau sur la base d'un type de couche et/ou d'informations d'échelle de couche de la i^{è} couche de réseau.

2. Procédé de réutilisation selon la revendication 1, dans lequel avant de déterminer si la valeur de hachage de la i^{è} couche de réseau est la même qu'une valeur de hachage correspondant à une couche de réseau précédente, le procédé de réutilisation comprend en outre :
l'établissement d'une table de hachage permettant de stocker des informations correspondant à chaque couche de réseau précédente, des champs dans la table de hachage pour chaque couche de réseau précédente comprenant : un numéro de série de couche, une valeur de hachage et une adresse de tête pour une instruction d'une couche correspondante.

3. Procédé de réutilisation selon la revendication 2, dans lequel les champs comprennent en outre : un type de couche et/ou une échelle de couche.

4. Procédé de réutilisation selon la revendication 2, dans lequel la génération de l'instruction de la i^{è} couche de réseau au moyen de la manière de réutilisation d'instructions comprend :
la copie (S108) d'une instruction à réutiliser en fonction de l'adresse de tête pour une instruction dans les informations correspondantes de la couche de réseau précédente ayant la même valeur de hachage stockée dans la table de hachage ; et
la modification (S109) de l'instruction à réutiliser de façon à générer une instruction de la i^{è} couche de réseau.

5. Procédé de réutilisation selon la revendication 2, dans lequel le procédé de réutilisation comprend en outre : si la valeur de hachage de la i^{è} couche de réseau n'existe pas dans la table de hachage, stocker (S106) la valeur de hachage et l'adresse de tête pour une instruction de la i^{è} couche de réseau dans la table de hachage, et générer (S107) directement l'instruction de la i^{è} couche de réseau.

6. Procédé de réutilisation selon l'une quelconque des revendications 1 à 5, dans lequel le procédé de réutilisation comprend en outre :
le stockage (S110) de l'instruction de la i^{è} couche de réseau.

7. Procédé de réutilisation selon la revendication 2, dans lequel avant la détermination pour savoir si la valeur de hachage de la i^{è} couche de réseau existe dans la table de hachage, le procédé de réutilisation comprend en outre :
la détermination (S104) pour savoir si i est supérieur ou égal à a, a étant un nombre entier positif et satisfaisant a≥2 ;
si i≥a, déterminer (S105) si la valeur de hachage de la i^{è} couche de réseau existe dans la table de hachage ; et
si i<a, stocker (S106) la valeur de hachage et l'adresse de tête pour une instruction de la i^{è} couche de réseau dans la table de hachage, et générer directement l'instruction de la i^{è} couche de réseau.

8. Procédé de réutilisation selon la revendication 6, dans lequel après le stockage de l'instruction de la i^{è} couche de réseau, le procédé de réutilisation comprend en outre :
le fait de laisser (S111) i=i+1, et la détermination (S112) pour savoir si i est inférieur ou égal à b, b étant un nombre entier positif et satisfaisant b>a ;
si i≤b, retourner (S103) à l'étape de calcul de la valeur de hachage de la i^{è} couche de réseau ; et
si i>b, finir la génération de l'instruction (S113) ;
b étant le nombre de couches de réseau du processeur de réseau neuronal.

9. Procédé de réutilisation selon l'une quelconque des revendications 1 à 8, dans lequel le réseau est un réseau neuronal artificiel.

10. Dispositif de réutilisation destiné à un processus de génération d'instructions, qui est utilisé pour un processeur de réseau neuronal, le dispositif étant **caractérisé par** :
un dispositif tampon de fonctionnement (3) configuré pour stocker des valeurs de hachage correspondant à des couches de réseau précédentes ;
un dispositif de commande de réutilisation d'instructions (1) configuré pour :
générer une valeur de hachage d'une i^{è} couche de réseau sur la base d'informations préconfigurées,
déterminer si la valeur de hachage de la i^{è} couche de réseau est la même qu'une valeur de hachage correspondant à une couche de réseau précédente, et si c'est le cas, émettre une commande de réutilisation d'instructions ; et
un dispositif de génération d'instructions de réutilisation (2) configuré pour effectuer une réutilisation d'instructions sur la base de la commande de réutilisation d'instructions émise par le dispositif de commande de réutilisation d'instructions (1), de manière à générer une instruction de la i^{è} couche de réseau, i étant un nombre entier positif ;
dans lequel le dispositif de commande de réutilisation d'instructions (1) comprend une unité de calcul (11) configurée pour calculer la valeur de hachage de la i^{è} couche de réseau sur la base d'un type de couche et/ou d'informations d'échelle de couche de la i^{è} couche de réseau.

11. Dispositif de réutilisation selon la revendication 10, dans lequel le dispositif de commande de réutilisation d'instructions (1) comprend :
l'unité de calcul (11) configurée pour recevoir le type de couche et/ou les informations d'échelle de couche de la i^{è} couche de réseau, et calculer la valeur de hachage de la i^{è} couche de réseau ; et
une unité de détermination et de recherche (12) configurée pour rechercher si une couche de réseau précédente ayant la même valeur de hachage que la i^{è} couche de réseau existe dans une table de hachage, et si c'est le cas, émettre la commande de réutilisation d'instructions.

12. Dispositif de réutilisation selon la revendication 10 ou 11, dans lequel le dispositif de génération d'instructions de réutilisation (2) comprend :
une unité d'extraction d'instructions de réutilisation (31) configurée pour, après réception de la commande de réutilisation d'instructions, copier une instruction à réutiliser en fonction d'une adresse de tête pour une instruction dans des informations correspondantes de la couche de réseau précédente ayant la même valeur de hachage stockée dans une table de hachage ; et
une unité de modification d'instructions (32) configurée pour modifier l'instruction à réutiliser de façon à générer l'instruction de la i^{è} couche de réseau.

13. Dispositif de réutilisation selon la revendication 10, dans lequel le dispositif de réutilisation comprend en outre :
un dispositif de génération d'instructions (4) configuré pour générer directement l'instruction de la i^{è} couche de réseau si le dispositif de commande de réutilisation d'instructions (1) détermine qu'aucune réutilisation d'instructions doit être effectuée.

14. Dispositif de réutilisation selon l'une quelconque des revendications 10 à 13, dans lequel le dispositif de réutilisation comprend en outre :
un dispositif de stockage d'instructions (5) configuré pour stocker l'instruction de la i^{è} couche de réseau.

15. Dispositif de réutilisation selon l'une quelconque des revendications 10 à 13, dans lequel le réseau est un réseau neuronal artificiel.

16. Dispositif de stockage (5) stockant des instructions qui, lorsqu'elles sont exécutées sur un dispositif informatique (11), mettent en œuvre le procédé de réutilisation selon l'une quelconque des revendications 1 à 9.
